# EUROPEAN PATENT SPECIFICATION

(11) **EP 3 905 707 B1**
(45) Date of publication and mention of the grant of the patent: **30.09.2026**
(21) Application number: 20192524.5
(22) Date of filing: 25.08.2020
(51) Int. Cl.: H04N 21/472, H04N 21/4725, H04N 21/482, H04N 21/44

(54) **DISPLAY DEVICE AND OPERATING METHOD THEREOF**
ANZEIGEVORRICHTUNG UND BETRIEBSVERFAHREN DAFÜR
AFFICHEUR ET PROCÉDÉ DE FONCTIONNEMENT CORRESPONDANT

(30) Priority: 29.04.2020 KR 20200052366
(43) Date of publication of application: 03.11.2021
(60) Divisional application: 23216565.4 / 4 346 220
(73) Proprietor: LG Electronics Inc., 07336 SEOUL (KR)
(72) Inventor: Heo, Seunghyun, 06772 Seoul (KR); Chang, Jeean, 06772 Seoul (KR); Lee, Jaekyung, 06772 Seoul (KR)
(74) Representative: Schornack, Oliver

(56) References cited:
- WO-A2-2010/117213
- US-A1- 2001 052 133
- US-B1- 6 865 746

## Description

### BACKGROUND

The present disclosure relates to a display device and an operating method thereof.

Digital TV services using wired or wireless communication networks are becoming common. Digital TV service can provide a variety of services that could not be provided in the conventional analog broadcasting service.

For example, IPTV (Internet Protocol Television), which is a type of digital TV service, and smart TV service provide bidirectionality that allows a user to actively select a type of viewing the program and viewing time. IPTV, smart TV service may provide a variety of additional services, such as Internet search, home shopping, and online games based on this bidirectionality.

In addition, recent TVs may provide search results for texts or images to users.

However, in the related art, there has been inconvenience in a search process. For example, a user has to directly input texts or upload images.

US 2001/0052133 A1 refers to a method that construes a still picture that can be displayed together with one or several marks. An arrow-shaped pointer can be generated and displayed on the still picture. If a viewer places the pointer over a highlighted or a marked item, a controller can detect a pointer's position value and can compare the detected position value with stored coordinate values. If there is a stored coordinate value whose distance from the detected position is shorter than a threshold value, the controller can then read URL information linked with that stored coordinate value, and the viewer can thus receive detailed information of a selected item written in a web page conducting a communication operation using read URL information.

US 6,865,746 B1 refers to a program guide capable of displaying an information display screen for an Episode when a user selects a listing for the Episode in a program listings display screen. The information display screen can include a related programs option for requesting to find programs related to the Episode. The program guide can display a related program find display screen when a user selects the related programs option from the information display screen.

WO 2010/117213 A2 refers to a broadcasting program-related information providing apparatus that includes a broadcast stream receiver, a stream processor, a display, an object detector, a keyword generator, a section setting unit, a related information searching unit and a related information providing unit.

### SUMMARY

The present disclosure provides a display device capable of providing search results without a user's direct input of texts or images.

The present disclosure provides a display device capable of providing diversity of search through a plurality of apps capable of providing search results for search sources.

The present invention provides a display device, defined as in claim 1, and an operating method of a display device, defined as in claim 15. Preferred embodiments are defined by the dependent claims.

According to one embodiment of the present disclosure, a display device includes a display configured to display an execution screen of a calling app, and a controller configured to receive an execution command of a context search app. The context search app may provide a search result for a search source. The controller may be configured to display, on the display, one or more search source icons corresponding to one or more search source apps matched with the calling app according to the received execution command, when one of the one or more search source icons is selected, acquire the search result for the search source through a search source app corresponding to the selected icon, and display the acquired search result on the display.

According to one embodiment of the present disclosure, an operating method of a display device includes displaying an execution screen of a calling app. An operating method may further include receiving an execution command of a context search app that provides a search result for a search source, displaying one or more search source icons corresponding to one or more search source apps matched with the calling app according to the received execution command, when one of the one or more search source icons is selected, acquiring the search result for the search source through a search source app corresponding to the selected icon, and displaying the acquired search result on the display.

The details of one or more embodiments are set forth in the accompanying drawings and the description below. Other features will be apparent from the description and drawings, and from the claims.

### BRIEF DESCRIPTION OF THE DRAWINGS

Fig. 1 is a block diagram illustrating a configuration of a display device according to an embodiment of the present disclosure.
Fig. 2 is a block diagram illustrating a remote control device according to an embodiment of the present disclosure.
Fig. 3 is a view illustrating an actual configuration of a remote control device according to an embodiment of the present disclosure.
Fig. 4 is a view of utilizing a remote control device according to an embodiment of the present disclosure.
Fig. 5 is a flowchart for describing an operating method of a display device, according to an embodiment of the present disclosure.
Fig. 6 is a view illustrating an example of displaying an indicator indicating that a context search app is executable when a pointer is located on a search source, according to an embodiment of the present disclosure.
Fig. 7 is a view for describing a process of extracting a plurality of search source apps matched with a calling app, according to an embodiment of the present disclosure.
Fig. 8 is a view illustrating a configuration of a source app table.
Fig. 9 is a view illustrating an example of displaying a search source app list, according to an embodiment of the present disclosure.
Fig. 10 is a view illustrating an example of outputting a search result for a search source in a preview form, according to an embodiment of the present disclosure.
Fig. 11 is a view illustrating an example of outputting a search result for a search source on a full screen, according to an embodiment of the present disclosure.
Figs. 12 and 13 are views for describing a process of providing a search result by using an image as a search source, according to an embodiment of the present disclosure.
Figs. 14 and 15 are views for describing a process of providing a search result by using an object included in an image as a search source, according to an embodiment of the present disclosure.
Fig. 16 is a view illustrating an example of controlling a home appliance, according to an embodiment of the present disclosure.
Fig. 17 is a view for describing a method for generating a continuous additional search source based on any one search source, according to another embodiment of the present disclosure.
Figs. 18 and 19 are views illustrating a process of generating a mind map, according to an embodiment of the present disclosure.

### DETAILED DESCRIPTION OF THE EMBODIMENTS

Hereinafter, embodiments relating to the present disclosure will be described in detail with reference to the accompanying drawings. The suffixes "module" and "interface" for components used in the description below are assigned or mixed in consideration of easiness in writing the specification and do not have distinctive meanings or roles by themselves.

A display device according to an embodiment of the present disclosure, for example, as an artificial display device that adds a computer supporting function to a broadcast receiving function, can have an easy-to-use interface such as a writing input device, a touch screen, or a spatial remote control device as an Internet function is added while fulfilling the broadcast receiving function. Then, with the support of a wired or wireless Internet function, it is possible to perform an e-mail, web browsing, banking, or game function in access to Internet and computers. In order to perform such various functions, standardized general purpose OS can be used.

Accordingly, since various apps are freely added or deleted on a general purpose OS kernel, a display device described herein, for example, can perform various user-friendly functions. The display device, in more detail, can be a network TV, Hybrid Broadcast Broadband TV (HBBTV), smart TV, light-emitting diode (LED) TV, organic light-emitting diode (OLED) TV, and so on and in some cases, can be applied to a smartphone.

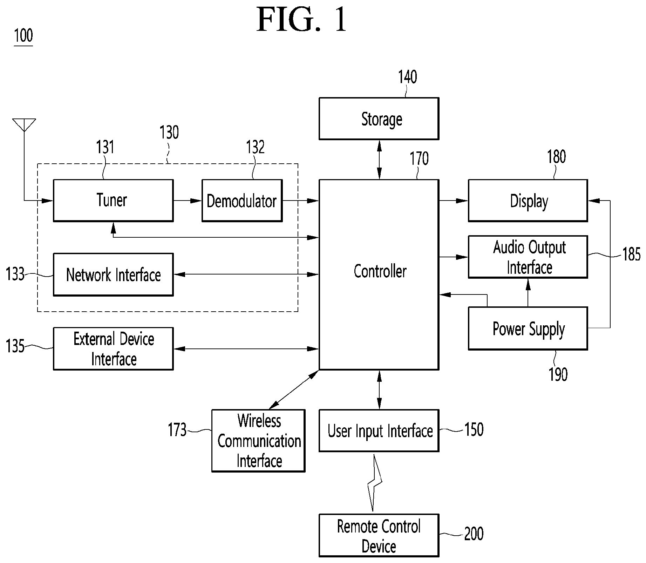

Fig. 1 is a block diagram illustrating a configuration of a display device according to an embodiment of the present disclosure.

Referring to Fig. 1, a display device 100 can include a broadcast receiver 130, an external device interface 135, a storage 140, a user input interface 150, a controller 170, a wireless communication interface 173, a display 180, an audio output interface 185, and a power supply 190.

The broadcast receiver 130 can include a tuner 131, a demodulator 132, and a network interface 133.

The tuner 131 can select a specific broadcast channel according to a channel selection command. The tuner 131 can receive broadcast signals for the selected specific broadcast channel.

The demodulator 132 can divide the received broadcast signals into video signals, audio signals, and broadcast program related data signals and restore the divided video signals, audio signals, and data signals to an output available form.

The external device interface 135 can receive an app or an app list in an adjacent external device and deliver it to the controller 170 or the storage 140.

The external device interface 135 can provide a connection path between the display device 100 and an external device. The external device interface 135 can receive at least one an image or audio output from an external device that is wirelessly or wiredly connected to the display device 100 and deliver it to the controller 170. The external device interface 135 can include a plurality of external input terminals. The plurality of external input terminals can include an RGB terminal, at least one High Definition Multimedia Interface (HDMI) terminal, and a component terminal.

An image signal of an external device input through the external device interface 135 can be output through the display 180. A voice signal of an external device input through the external device interface 135 can be output through the audio output interface 185.

An external device connectable to the external device interface 135 can be one of a set-top box, a Blu-ray player, a DVD player, a game console, a sound bar, a smartphone, a PC, a USB Memory, and a home theater system, but this is just exemplary.

The network interface 133 can provide an interface for connecting the display device 100 to a wired/wireless network including the Internet network. The network interface 133 can transmit or receive data to or from another user or another electronic device through an accessed network or another network linked to the accessed network.

Additionally, some content data stored in the display device 100 can be transmitted to a user or an electronic device, which is selected from other users or other electronic devices pre-registered in the display device 100.

The network interface 133 can access a predetermined webpage through an accessed network or another network linked to the accessed network. In other words, the network interface 133 can transmit or receive data to or from a corresponding server by accessing a predetermined webpage through the network.

Then, the network interface 133 can receive contents or data provided from a content provider or a network operator. In other words, the network interface 133 can receive contents such as movies, advertisements, games, VODs, and broadcast signals, which are provided from a content provider or a network provider, through network and information relating thereto.

Additionally, the network interface 133 can receive firmware update information and update files provided from a network operator and transmit data to an Internet or content provider or a network operator.

The network interface 133 can select and receive a desired app among apps open to the air, through network.

The storage 140 can store signal-processed image, voice, or data signals stored by a program in order for each signal processing and control in the controller 170.

Additionally, the storage 140 can perform a function for temporarily storing image, voice, or data signals output from the external device interface 135 or the network interface 133 and can store information on a predetermined image through a channel memory function.

The storage 140 can store an app or an app list input from the external device interface 135 or the network interface 133.

The display device 100 can play content files (for example, video files, still image files, music files, document files, app files, and so on) stored in the storage 140 and provide them to a user.

The user input interface 150 can deliver signals input by a user to the controller 170 or deliver signals from the controller 170 to a user. For example, the user input interface 150 can receive or process control signals such as power on/off, channel selection, and screen setting from the remote control device 200 or transmit control signals from the controller 170 to the remote control device 200 according to various communication methods such as Bluetooth, Ultra Wideband (WB), ZigBee, Radio Frequency (RF), and IR.

Additionally, the user input interface 150 can deliver, to the controller 170, control signals input from local keys (not illustrated) such as a power key, a channel key, a volume key, and a setting key.

Image signals that are image-processed in the controller 170 can be input to the display 180 and displayed as an image corresponding to corresponding image signals. Additionally, image signals that are image-processed in the controller 170 can be input to an external output device through the external device interface 135.

Voice signals processed in the controller 170 can be output to the audio output interface 185. Additionally, voice signals processed in the controller 170 can be input to an external output device through the external device interface 135.

Besides that, the controller 170 can control overall operations in the display device 100. Additionally, the controller 170 can control the display device 100 by a user command or internal program input through the user input interface 150 and download a desired app or app list into the display device 100 in access to network.

The controller 170 can output channel information selected by a user together with processed image or voice signals through the display 180 or the audio output interface 185.

Additionally, according to an external device image playback command received through the user input interface 150, the controller 170 can output image signals or voice signals of an external device such as a camera or a camcorder, which are input through the external device interface 135, through the display 180 or the audio output interface 185.

Moreover, the controller 170 can control the display 180 to display images and control broadcast images input through the tuner 131, external input images input through the external device interface 135, images input through the network interface, or images stored in the storage 140 to be displayed on the display 180. In this case, an image displayed on the display 180 can be a still image or video and also can be a 2D image or a 3D image.

Additionally, the controller 170 can play content stored in the display device 100, received broadcast content, and external input content input from the outside, and the content can be in various formats such as broadcast images, external input images, audio files, still images, accessed web screens, and document files.

The wireless communication interface 173 can perform a wired or wireless communication with an external electronic device. The wireless communication interface 173 can perform short-range communication with an external device. For this, the wireless communication interface 173 can support short-range communication by using at least one of Bluetooth^{™}, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication interface 173 can support wireless communication between the display device 100 and a wireless communication system, between the display device 100 and another display device 100, or between networks including the display device 100 and another display device 100 (or an external server) through wireless area networks. The wireless area networks can be wireless personal area networks.

Herein, the other display device 100 can be a mobile terminal such as a wearable device (for example, a smart watch, a smart glass, and a head mounted display (HMD)) or a smartphone, which is capable of exchanging data (or inter-working) with the display device 100. The wireless communication interface 173 can detect (or recognize) a communicable wearable device around the display device 100. Furthermore, if the detected wearable device is a device authenticated to communicate with the display device 100, the controller 170 can transmit at least part of data processed in the display device 100 to the wearable device through the wireless communication interface 173. Accordingly, a user of the wearable device can use the data processed in the display device 100 through the wearable device.

The display 180 can convert image signals, data signals, or on-screen display (OSD) signals, which are processed in the controller 170, or images signals or data signals, which are received in the external device interface 135, into R, G, and B signals to generate driving signals.

Meanwhile, the display device 100 illustrated in Fig. 1 is just one embodiment of the present disclosure and thus, some of the components illustrated can be integrated, added, or omitted according to the specification of the actually implemented display device 100.

In other words, if necessary, two or more components can be integrated into one component or one component can be divided into two or more components and configured. Additionally, a function performed by each block is to describe an embodiment of the present disclosure and its specific operation or device does not limit the scope of the present disclosure.

According to another embodiment of the present disclosure, unlike Fig. 1, the display device 100 can receive images through the network interface 133 or the external device interface 135 and play them without including the tuner 131 and the demodulator 132.

For example, the display device 100 can be divided into an image processing device such as a set-top box for receiving broadcast signals or contents according to various network services and a content playback device for playing contents input from the image processing device.

In this case, an operating method of a display device according to an embodiment of the present disclosure described below can be performed by one of the display device described with reference to Fig. 1, an image processing device such as the separated set-top box, and a content playback device including the display 180 and the audio output interface 185.

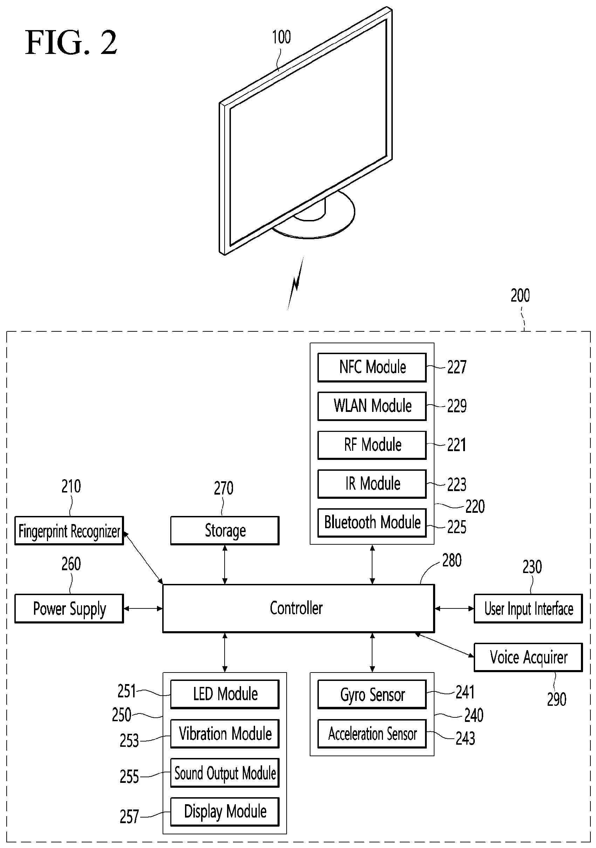

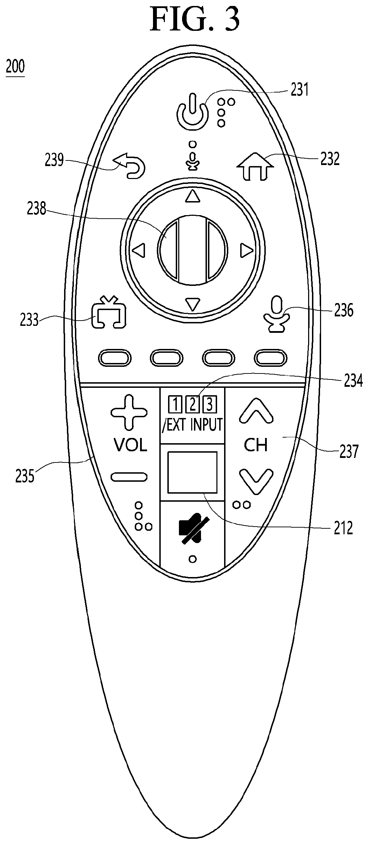

Then, referring to Figs. 2 and 3, a remote control device is described according to an embodiment of the present disclosure.

Fig. 2 is a block diagram illustrating a remote control device according to an embodiment of the present disclosure and Fig. 3 is a view illustrating an actual configuration of a remote control device 200 according to an embodiment of the present disclosure.

First, referring to Fig. 2, a remote control device 200 can include a fingerprint recognizer 210, a wireless communication interface 220, a user input interface 230, a sensor 240, an output interface 250, a power supply 260, a storage 270, a controller 280, and a voice acquirer 290.

Referring to Fig. 2, the wireless communication interface 220 transmits/receives signals to/from an arbitrary any one of display devices according to the above-mentioned embodiments of the present disclosure.

The remote control device 200 can include a radio frequency (RF) module 221 for transmitting/receiving signals to/from the display device 100 according to the RF communication standards and an IR module 223 for transmitting/receiving signals to/from the display device 100 according to the IR communication standards. Additionally, the remote control device 200 can include a Bluetooth module 225 for transmitting/receiving signals to/from the display device 100 according to the Bluetooth communication standards. Additionally, the remote control device 200 can include a Near Field Communication (NFC) module 227 for transmitting/receiving signals to/from the display device 100 according to the NFC communication standards and a WLAN module 229 for transmitting/receiving signals to/from the display device 100 according to the Wireless LAN (WLAN) communication standards.

Additionally, the remote control device 200 can transmit signals containing information on a movement of the remote control device 200 to the display device 100 through the wireless communication interface 220.

Moreover, the remote control device 200 can receive signals transmitted from the display device 100 through the RF module 221 and if necessary, can transmit a command on power on/off, channel change, and volume change to the display device 100 through the IR module 223.

The user input interface 230 can be configured with a keypad button, a touch pad, or a touch screen. A user can manipulate the user input interface 230 to input a command relating to the display device 100 to the remote control device 200. If the user input interface 230 includes a hard key button, a user can input a command relating to the display device 100 to the remote control device 200 through the push operation of the hard key button. This will be described with reference to Fig. 3.

Referring to Fig. 3, the remote control device 200 can include a plurality of buttons. The plurality of buttons can include a fingerprint recognition button 212, a power button 231, a home button 232, a live button 233, an external input button 234, a voice adjustment button 235, a voice recognition button 236, a channel change button 237, a check button 238, and a back button 239.

The fingerprint recognition button 212 can be a button for recognizing a user's fingerprint. According to an embodiment of the present disclosure, the fingerprint recognition button 212 can perform a push operation and receive a push operation and a fingerprint recognition operation. The power button 231 can be button for turning on/off the power of the display device 100. The home button 232 can be a button for moving to the home screen of the display device 100. The live button 233 can be a button for displaying live broadcast programs. The external input button 234 can be a button for receiving an external input connected to the display device 100. The voice adjustment button 235 can be a button for adjusting the size of a volume output from the display device 100. The voice recognition button 236 can be a button for receiving user's voice and recognizing the received voice. The channel change button 237 can be a button for receiving broadcast signals of a specific broadcast channel. The check button 238 can be a button for selecting a specific function and the back button 239 can be a button for returning to a previous screen.

Fig. 2 will be described again.

If the user input interface 230 includes a touch screen, a user can touch a soft key of the touch screen to input a command relating to the display device 100 to the remote control device 200. Additionally, the user input interface 230 can include various kinds of input means manipulated by a user, for example, a scroll key and a jog key, and this embodiment does not limit the scope of the present disclosure.

The sensor 240 can include a gyro sensor 241 or an acceleration sensor 243 and the gyro sensor 241 can sense information on a movement of the remote control device 200.

For example, the gyro sensor 241 can sense information on an operation of the remote control device 200 on the basis of x, y, and z axes and the acceleration sensor 243 can sense information on a movement speed of the remote control device 200. Moreover, the remote control device 200 can further include a distance measurement sensor and sense a distance with respect to the display 180 of the display device 100.

The output interface 250 can output image or voice signals corresponding to manipulation of the user input interface 235 or corresponding to signals transmitted from the display device 100. A user can recognize whether the user input interface 235 is manipulated or the display device 100 is controlled through the output interface 250.

For example, the output interface 250 can include an LED module 251 for flashing, a vibration module 253 for generating vibration, a sound output module 255 for outputting sound, or a display module 257 for outputting an image, if the user input interface 235 is manipulated or signals are transmitted/received to/from the display device 100 through the wireless communication interface 220.

Additionally, the power supply 260 supplies power to the remote control device 200 and if the remote control device 200 does not move for a predetermined time, stops the power supply, so that power waste can be reduced. The power supply 260 can resume the power supply if a predetermined key provided at the remote control device 200 is manipulated.

The storage 270 can store various kinds of programs and app data necessary for control or operation of the remote control device 200. If the remote control device 200 transmits/receives signals wirelessly through the display device 100 and the RF module 221, the remote control device 200 and the display device 100 transmits/receives signals through a predetermined frequency band.

The controller 280 of the remote control device 200 can store, in the storage 270, information on a frequency band for transmitting/receiving signals to/from the display device 100 paired with the remote control device 200 and refer to it.

The controller 280 controls general matters relating to control of the remote control device 200. The controller 280 can transmit a signal corresponding to a predetermined key manipulation of the user input interface 235 or a signal corresponding to movement of the remote control device 200 sensed by the sensor 240 to the display device 100 through the wireless communication interface 220.

Additionally, the voice acquirer 290 of the remote control device 200 can obtain voice.

The voice acquirer 290 can include at least one microphone 291 and obtain voice through the microphone 291.

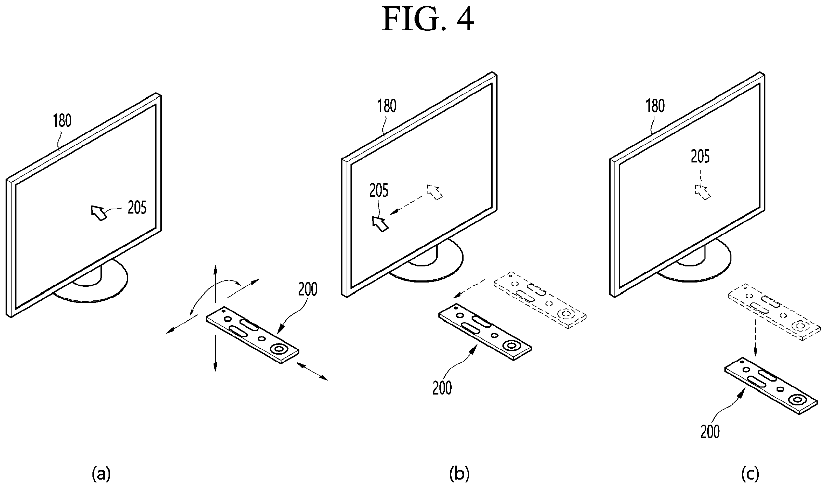

Next, Fig. 4 is illustrated.

Fig. 4 is a view of utilizing a remote control device according to an embodiment of the present disclosure.

Fig. 4(a) illustrates that a pointer 205 corresponding to the remote control device 200 is displayed on the display 180.

A user can move or rotate the remote control device 200 vertically or horizontally. The pointer 205 displayed on the display 180 of the display device 100 corresponds to a movement of the remote control device 200. Since the corresponding pointer 205 is moved and displayed according to a movement on a 3D space as show in the drawing, the remote control device 200 can be referred to as a spatial remote control device.

Fig. 4(b) illustrates that if a user moves the remote control device 200, the pointer 205 displayed on the display 180 of the display device 100 is moved to the left according to the movement of the remote control device 200.

Information on a movement of the remote control device 200 detected through a sensor of the remote control device 200 is transmitted to the display device 100. The display device 100 can calculate the coordinates of the pointer 205 from the information on the movement of the remote control device 200. The display device 100 can display the pointer 205 to match the calculated coordinates.

Fig. 4(c) illustrates that while a specific button in the remote control device 200 is pressed, a user moves the remote control device 200 away from the display 180. Thus, a selection area in the display 180 corresponding to the pointer 205 can be zoomed in and displayed larger.

On the contrary, when the user moves the remote control device 200 to approach the display 180, the selection area in the display 180 corresponding to the pointer 205 may be zoomed out and reduced.

On the other hand, if the remote control device 200 is moved away from the display 180, a selection area can be zoomed out and if the remote control device 200 is moved closer to the display 180, a selection area can be zoomed in.

Additionally, if a specific button in the remote control device 200 is pressed, recognition of a vertical or horizontal movement can be excluded. In other words, if the remote control device 200 is moved away from or closer to the display 180, the up, down, left, or right movement cannot be recognized and only the back and forth movement can be recognized. While a specific button in the remote control device 200 is not pressed, only the pointer 205 is moved according to the up, down, left or right movement of the remote control device 200.

Moreover, the moving speed or moving direction of the pointer 205 can correspond to the moving speed or moving direction of the remote control device 200.

Furthermore, a pointer in this specification means an object displayed on the display 180 in response to an operation of the remote control device 200. Accordingly, besides an arrow form displayed as the pointer 205 in the drawing, various forms of objects are possible. For example, the above concept includes a point, a cursor, a prompt, and a thick outline. Then, the pointer 205 can be displayed in correspondence to one point of a horizontal axis and a vertical axis on the display 180 and also can be displayed in correspondence to a plurality of points such as a line and a surface.

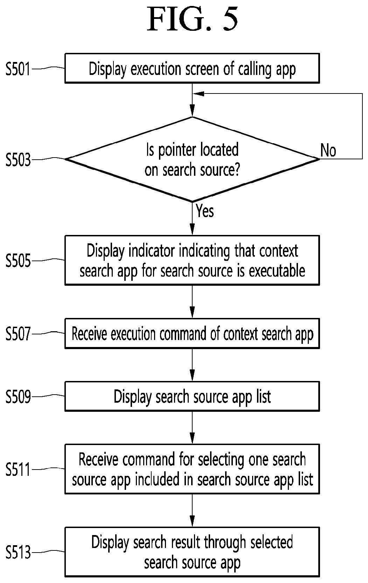

Next, the operating method of the display device 100, according to an embodiment of the present disclosure, will be described with reference to Fig. 5.

Fig. 5 is a flowchart for describing the operating method of the display device, according to an embodiment of the present disclosure.

Hereinafter, "app" may be an abbreviation for "application".

Referring to Fig. 5, the controller 170 of the display device 100 displays an execution screen of a calling app on the display 180 (S501).

In an embodiment, the calling app is a basic app installed on the display device 100 and may be an app called according to a user input.

The calling app may be one of a live TV app that provides real-time broadcasting, a channel banner app that provides channel banners, an EPG app that provides electronic program guide (EPG), a live menu app that provides live menus, a settings app that sets the display device 100, a sports setting alarm app that provides sports alarm, and a gallery app that provides images or videos

The calling app may be displayed on the initial screen of the display device 100. The initial screen of the display device 100 may be a screen displayed when the power of the display device 100 is turned on.

The execution screen of the calling app may include one or more texts or one or more images. The search source may be one of the one or more texts or one of the one or more images.

The controller 170 determines whether the pointer 205 is located on the search source included in the execution screen of the calling app (S503).

In an embodiment, the search source may be text or image. The search source may be a source that is selectable by a user input. In detail, the search source may be a source that is clickable by the pointer 205.

When it is determined that the pointer 205 is located on the search source, the controller 170 displays, on the display 180, an indicator indicating that the context search app for the search source is executable (S505).

The context search app may be an app that can provide the search result for the search source.

In detail, the context search app provides the search result for the search source, but may be an app associated with the calling app. This will be described below in detail.

The controller 170 may compare coordinate information about the pointer 205 with coordinate information about the search source, and when it is determined that the position of the pointer 205 is located on the search source, may display an indicator indicating that the context search app is executable.

The controller 170 may display the indicator on one side of the pointer 205 or the search source.

The indicator may be an app icon corresponding to the context search app, but this is only an example.

As another example, when it is determined that the pointer 205 is located on the search source, the controller 170 may display an indicator while changing one of the shape and size of the pointer 205.

As another example, when it is determined that the pointer 205 is located on the search source, the controller 170 may change at least one of the shape or the size of the pointer 205 without displaying the indicator.

Operation S505 may be omitted.

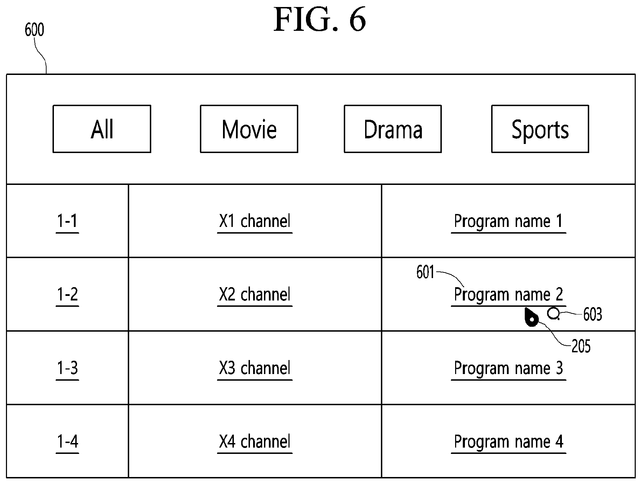

Fig. 6 is a view illustrating an example of displaying an indicator indicating that a context search app is executable when a pointer is located on a search source, according to an embodiment of the present disclosure.

Referring to Fig. 6, an EPG screen 600 according to the execution of the EPG app is illustrated.

The EPG app may be a calling app described in operation S601.

The display device 100 may display the EPG screen 600 according to a user input for executing the EPG app.

The EPG screen 600 may include a plurality of channel numbers, a plurality of channel names, and program names broadcasted over time in the respective channels.

The EPG screen 600 may include a plurality of search sources. Each search source is a source that is selectable or clickable through pointer 205.

The search source can be text or image.

Within the EPG screen 600, a plurality of selectable search sources may be predetermined.

When the pointer 205 is located on the program name 601, the display device 100 may display an indicator 603 indicating that the context search app for the program name 601 is executable.

The indicator 603 may be displayed adjacent to the program name 601 or may be displayed adjacent to the pointer 205.

As another example, when the pointer 205 is located on the program name 601, the display device 100 may change at least one of the shape or the size of the pointer 205, instead of displaying the indicator 603.

Meanwhile, when the pointer 205 is located in a region including the program name 601, the display device 100 may display the indicator 603.

The user can intuitively recognize the execution of the search source app through the indicator 603.

Fig. 5 is described again.

The controller 170 receives an execution command of the context search app (S507) and displays a search source app list including search source apps on the display 180 according to the received execution command (S509).

When a command for selecting a wheel key provided in the remote control device 200 for a certain time or longer is received from the remote control device 200, the controller 170 may be determined that the execution command of the context search app is received.

When the pointer 205 is located on the search source and a command for selecting a specific button provided on the remote control device 200 is removed, the controller 170 may determine that the execution command of the context search app is received.

The search source app list may include one or more icons for identifying one or more search source apps.

The context search app may be an app for providing a plurality of search source apps previously matched with the calling app.

In detail, the context search app may be an app for providing a search result for a search source through a plurality of search source apps previously matched with the calling app.

Each of the plurality of search source apps may be an app for providing a search result for a search source.

Each of the plurality of search source apps may be an app previously matched with the executed calling app.

The controller 170 may acquire a plurality of search source apps matched with the calling app by using the source app table stored in the storage 140.

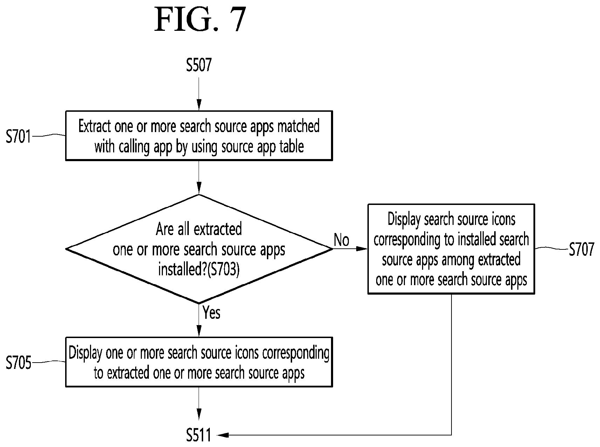

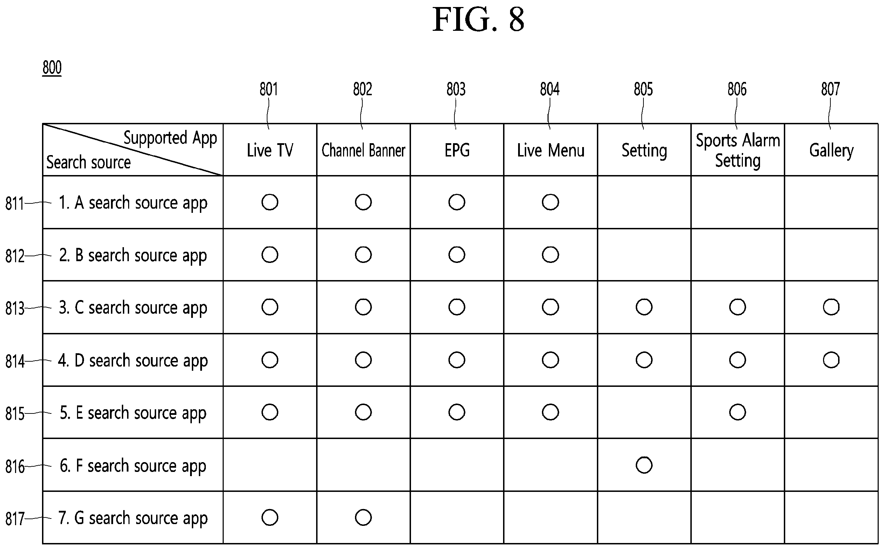

This will be described below with reference to Figs. 7 and 8.

Fig. 7 is a view for describing a process of extracting a plurality of search source apps matched with a calling app, according to an embodiment of the present disclosure, and Fig. 8 is a view illustrating a configuration of a source app table.

Referring to Fig. 7, the controller 170 extracts one or more search source apps matched with the calling app by using the source app table stored in the storage 140 according to the execution command of the context search app (S701).

The source app table may be a table indicating a correspondence relationship between the plurality of search source apps matched with the calling app. The source app table may be received from an external server through the network interface 133.

Fig. 8 illustrates a source app table 800 in which a plurality of search source apps are previously matched with a plurality of calling apps.

The source app table 800 may represent a correspondence relationship between the calling apps and the plurality of search source apps matched with the calling apps.

Each of the plurality of calling apps 801 to 807 may be an app installed on the display device 100.

The live TV app 801 may be an app for providing real-time broadcasting.

A channel banner app 802 may be an app for providing a channel banner.

An EPG app 803 may be an app for providing an EPG.

A live menu app 804 may be an app for setting functions when watching live TV.

A setting app 805 may be an app for setting functions of the display device 100.

A sports alarm setting app 806 may be an app for setting a notification for a sports event.

A gallery app 807 may be an app for providing images or videos.

Referring to the source app table 800, one or more search source apps among first to seventh search source apps 811 to 817 are matched in each calling app.

Each search source app may be deleted in the display device 100. In addition, a new search source app may be added. In this case, the source app table 800 may reflect newly added or deleted apps.

The search source app is an app that can output search results for text or images and may be an app that can output search results such as content providers, web browsers, user guides, and artificial intelligence (AI) keywords.

For example, the first to fifth search source apps 811 to 815 and the seventh search source app 817 may be matched in each of the live TV app 801 and the channel banner app 802.

The first to fifth search source apps 811 to 815 may be matched in each of the EPG app 803 and the live menu app 804.

The third search source app 813, the fourth search source app 814, and the sixth search source app 816 may be matched in the setting app 805.

The third to fifth search source apps 813 to 815 may be matched in the sports alarm setting app 806.

The third search source app 813 and the fourth search source app 814 may be matched in the gallery app 807.

The first search source app 811 may be exposed only to programs in which program information exists. The second search source app 812 may be exposed only to genres such as dramas or movies. That is, the search source app may be matched with a specific calling app and exposed according to the attribute of the calling app.

The controller 170 may determine what the calling app executed through the display device 100 is and may extract one or more search source apps corresponding to the determined calling app by using the source app table 800.

Meanwhile, the controller 170 may transmit additional information to the search source app in addition to the search source so as to improve search quality.

For example, when the calling app is the setting app 805, the controller 170 may transmit, to the third search source app 803, search information and intent information indicating the intent for the function setting of the TV together.

The intent information may be acquired according to the attribute of the calling app. That is, since the setting app 805 is an app for setting functions of the display device 100, an intent indicating the purpose of the setting app 805 may be transmitted to the search source app together with the search source.

That is, the controller 170 may acquire the search result for the context search source including the intent obtained according to the attribute of the calling app and the search source through the search source app.

Therefore, compared with a case where only the search source such as text is transmitted through the third search source app 8030, the intent indicating the setting of the functions of the TV is reflected, thereby more improving the search quality.

Meanwhile, depending on the user's preference, an app other than a search source app predefined in a calling app may be exposed, or a search source app may be called in an app not designated as a calling app.

in this case, when an image of an icon corresponding to the search source app, a color of the icon, or the icon is selected, an identifier of the app to be executed and parameter information to be transmitted to the app to be executed may be required. The parameter information may include parameters required for the execution of the app.

In order to expose then app other than the search source app predefined in the calling app or call the search source app in the app not designated as the calling app, a separate user setting menu may be required and a search source app matched with a specific app may be set as user customization through a user setting menu.

Fig. 7 is described again.

The controller 170 determines whether the extracted one or more search source apps are all installed on the display device 100 (S703).

The controller 170 may determine the installation or non-installation by comparing the identifiers of the apps installed on the display device 100 with one or more identifiers of the extracted one or more search source apps.

When the extracted one or more search source apps are all installed on the display device 100, the controller 170 displays, on the display 180, one or more search source icons corresponding to each of the extracted one or more search source apps (S705).

That is, one or more search source icons corresponding to the one or more search source apps may constitute a search source app list.

The controller 170 may arrange one or more search source icons so that one or more search source icons form a circle, centering on the search source.

The controller 170 displays, on the display 180, the search source icon corresponding to the search source app installed on the display device 100 among the extracted one or more search source apps (S707).

The controller 170 displays, on one side of the search source, only the search source icon corresponding to the search source app installed on the display device 100 among the extracted one or more search source apps.

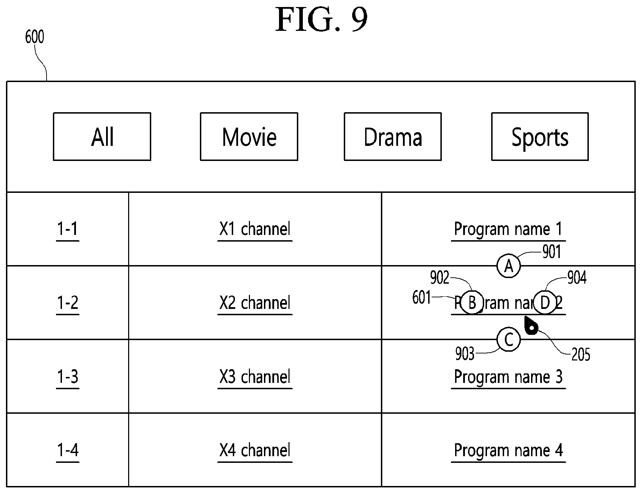

Fig. 9 is a view illustrating an example of displaying the search source app list, according to an embodiment of the present disclosure.

Fig. 9 is a view described in connection with the embodiment of Fig. 6.

Referring to Fig. 9, when the execution command for executing the context search app is received, the controller 170 may display a plurality of search source icons 901 to 904 indicating a plurality of search source apps on the execution screen 600 of the EPG app.

The plurality of search source icons 901 to 904 may be arranged in a circular shape around the pointer 205 or the search source 601.

The first search source icon 901 may be an icon indicating the first search source app 801, the second search source icon 902 may be an icon indicating the second search source app 802, the third search source icon 903 is an icon indicating the third search source app 803, and the fourth search source icon 904 may be an icon indicating the fourth search source app 804.

The plurality of search source icons 901 to 904 may be arranged differently according to the frequency of use of the search source app.

That is, as the frequency of use of the search source app increases, the corresponding the search source icon may be placed in front.

When one of the plurality of search source icons 901 to 904 is selected, the controller 170 may display the search result for the search source 601 through the search source app corresponding to the selected icon. This will be described below.

Fig. 5 is described again.

The controller 170 receives a command for selecting any one search source app included in the search source app list (S511) and displays the search result for the search source through the selected search source app (S513).

As illustrated in Fig. 9, the controller 170 may receive a command for selecting any one of the plurality of search source icons 901 to 904 included in the search source app list through the pointer 205.

The controller 170 may acquire the search result for the search source 601 through the search source app corresponding to the selected search source icon according to the received command.

In an embodiment, the controller 170 may display the search result for the search source through the selected search source app in a preview form.

In another embodiment, the controller 170 may display the search result through the selected search source app on the full screen.

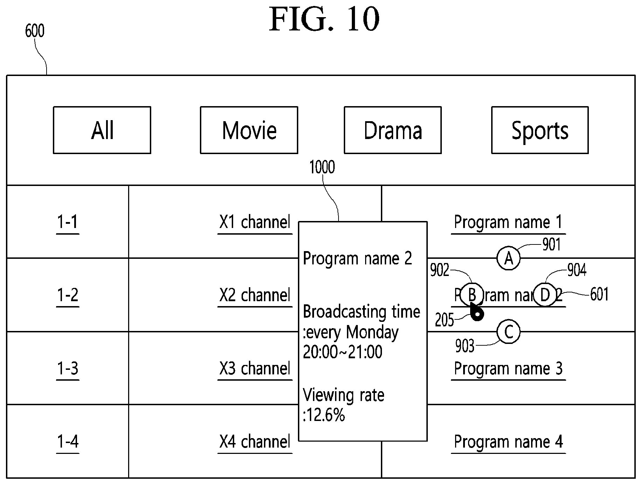

Fig. 10 is a view illustrating an example of outputting the search result for the search source in the preview form, according to an embodiment of the present disclosure.

Fig. 10 may be a screen shown after the embodiment of Fig. 9.

Referring to Fig. 10, the controller 170 may determine whether the pointer 205 is located on the second search source icon 902.

When it is determined that the pointer 205 is located on the second search source icon 902, the controller 170 may display a preview search result 1000 for the search source 601 on one side of the second search source icon 902 in the preview form.

The search result 1000 may be search information performed through the second search source app 812 matched with the second search source icon 902.

When the pointer 205 is located on the second search source icon 902, the controller 170 may execute the second search source app 812 in the background to acquire the search result for the search source 601.

The controller 170 may capture the obtained search result and acquire the captured image as the preview search result 1000.

In another embodiment, the preview search result 1000 may indicate a search result previously found through the second search source app 812.

In another embodiment, the preview search result 1000 may be a sample result previously stored in the storage 140.

According to an embodiment of the present disclosure, like the preview search result 1000, a result of switching to the search source app for the search source 601 is previously displayed, thereby preventing a user from switching unnecessary apps.

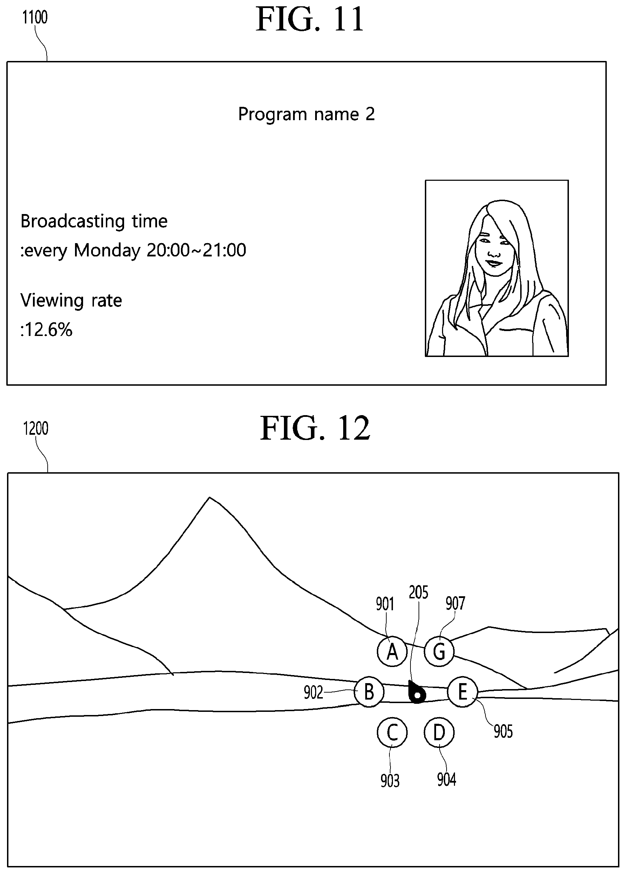

Fig. 11 is a view illustrating an example of outputting the search result for the search source on the full screen, according to an embodiment of the present disclosure.

In Fig. 10, when a command for selecting the second search source icon 902 is received, the controller 170 may switch from the EPG screen 600 to a search result screen 1000.

The search result screen 1000 may include search information about the search source 601 acquired through the second search source app 812.

When the search source 601 is a program name, the search information may include a broadcasting time of the program, a viewing rate of the program, and a thumbnail image of the program.

In this way, the user can easily check the search result for the search source, without having to input separate text for the search. In addition, since a plurality of search source apps are provided for one search source, various search results can be checked.

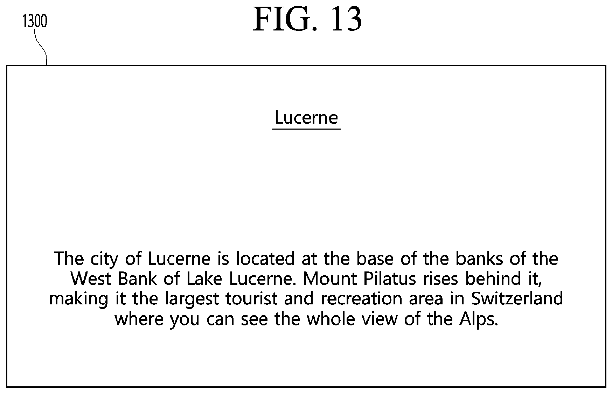

Figs. 12 and 13 are views for describing a process of providing a search result by using an image as a search source, according to an embodiment of the present disclosure.

Referring to Fig. 12, the display device 100 displays an execution screen 1200 of a live TV app that is a calling app. The execution screen 1200 of the live TV app may be a real-time broadcasting screen.

When the execution command of the context search app is received, the display device 100 may display a plurality of search source icons 901 to 905 and 907 corresponding to a plurality of search source apps around the pointer 205.

The plurality of search source icons 901 to 905 and 907 may be icons corresponding to the plurality of search source apps matched with the live TV app, respectively.

As illustrated in Fig. 13, when a command for selecting any one of the plurality of search source icons 901 to 905 and 907 is selected through the pointer 205, the display device 100 may display a search result 1300 for an image of the execution screen 1200 through a search source app corresponding to a search source icon selected according to the command.

That is, the display device 100 may acquire an image of the execution screen 1200 of the live TV app as a search source.

When the image is a landscape photograph of Lucerne, Switzerland, the search result may include search information about Lucerne.

As described above, according to an embodiment of the present disclosure, the user can easily check the search result for the image while watching TV.

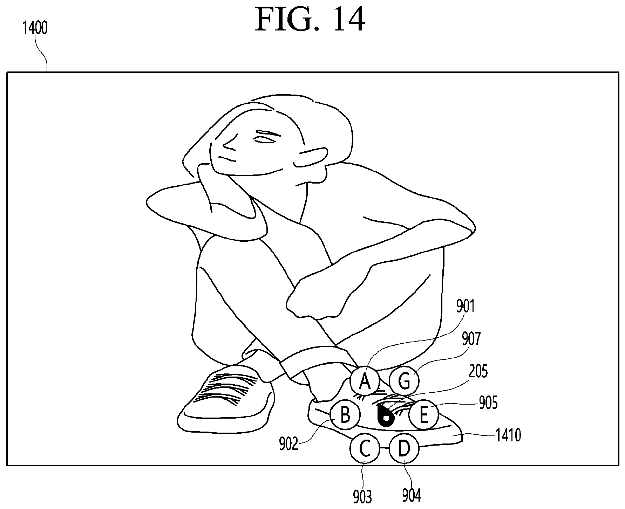

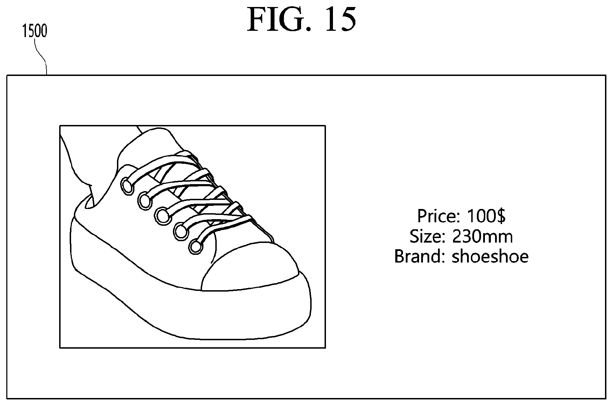

Figs. 14 and 15 are views for describing a process of providing a search result by using an object included in an image as a search source, according to an embodiment of the present disclosure.

Referring to Fig. 14, the display device 100 displays an execution screen 1400 of a live TV app.

The display device 100 may periodically receive data for an image frame from an auto content recognition (ACR) server.

The data for the image frame may include identification data of an object included in the image frame and coordinate data of the object. The identification data of the object is an identifier for identifying the object and may include the name of the object, the brand of the object, and the model name of the object.

The object may be selectable or clickable by the pointer 205.

When the pointer 205 is located on the object 1410, the display device 100 may extract identification data of the object 1410 from data about the image frame.

When the execution command of the context search app is received, the display device 100 may display a plurality of search source icons 901 to 905 and 907 corresponding to a plurality of search source apps around the pointer 205.

When one of the plurality of search source icons 901 to 905 and 907 is selected, the display device 100 may transmit the identification data of the object 1410 to the search source app corresponding to the selected icon.

When the search source app corresponding to the selected icon is a shopping app for providing shopping information, the shopping app may acquire a search result based on the identification data of the object 1410.

As illustrated in Fig. 15, the display device 100 may display a search screen 1500 including the search information of the object 1410 acquired through the shopping app.

Meanwhile, according to another embodiment, the display device 100 may transmit, to the ACR server, the image frame of the execution screen 1400 and coordinate information of the pointer 205 located in the image frame.

The ACR server may acquire the identification data of the object based on the received image frame and coordinate information of the pointer 205 and transmit the acquired object identification data to the display device 100.

The display device 100 may acquire the object identification data received from the ACR server as the search source. The display device 100 may provide search information about the object identification data through the selected search source app.

As described above, according to an embodiment of the present disclosure, the user can easily check the search result for the desired object while viewing an image.

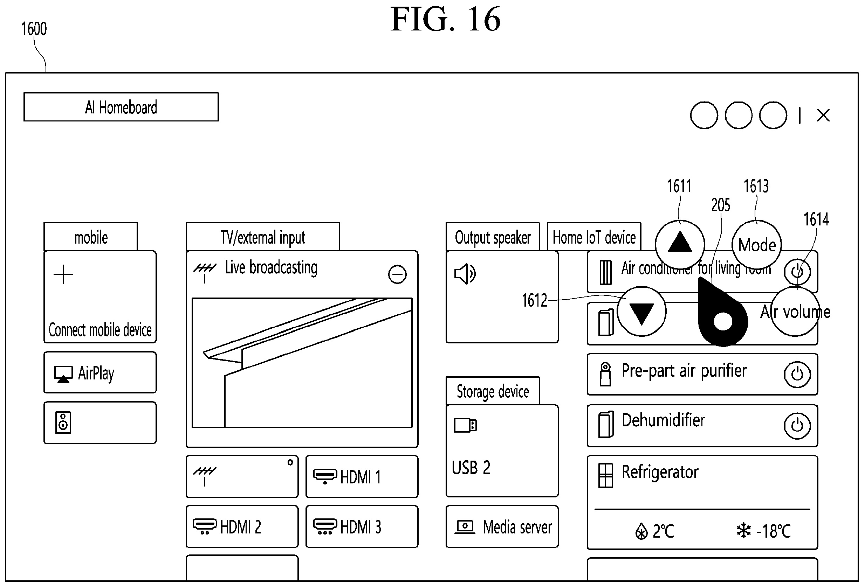

Fig. 16 is a view illustrating an example of controlling a home appliance, according to an embodiment of the present disclosure.

Referring to Fig. 16, a home screen 1600 of the display device 100 is illustrated.

The home screen 1600 may include an IoT device item capable of controlling a plurality of home appliances connected to the display device 100 through IoT.

The IoT device item may include device buttons corresponding to the plurality of home appliances.

When the pointer 205 is located on an air conditioner button 1610, the display device 100 may arrange a plurality of control icons 1611 to 1614, which can control the operation of the air conditioner 1610, around the pointer 205.

The first control icon 1611 may be an icon that increases the wind speed of the air conditioner, the second control icon 1612 may be an icon for reducing the wind speed of the air conditioner, the third control icon 1613 may be an icon for setting the operation mode of the air conditioner, and the fourth control icon 1614 may be an icon for adjusting the air volume of the air conditioner.

When one of the plurality of control icons 1611 to 1614 is selected, the display device 100 may transmit, to the air conditioner, a command for controlling the operation of the air conditioner corresponding to the selected icon.

Meanwhile, according to another embodiment of the present disclosure, the search source may be voice data corresponding to a voice uttered by a user.

In this case, operations S503 and S505 of Fig. 5 may be omitted.

The display device 100 may convert voice data into text data and acquire the converted text data as the search source. The display device 100 may display a plurality of search source apps corresponding to the calling app according to the execution command of the context search app.

The display device 100 may display the search result for the text data on the display 180 through the search source app selected among the plurality of search source apps.

As described above, according to an embodiment of the present disclosure, it is possible to acquire the search result through the desired search source app by using the voice command uttered by the user as the search source.

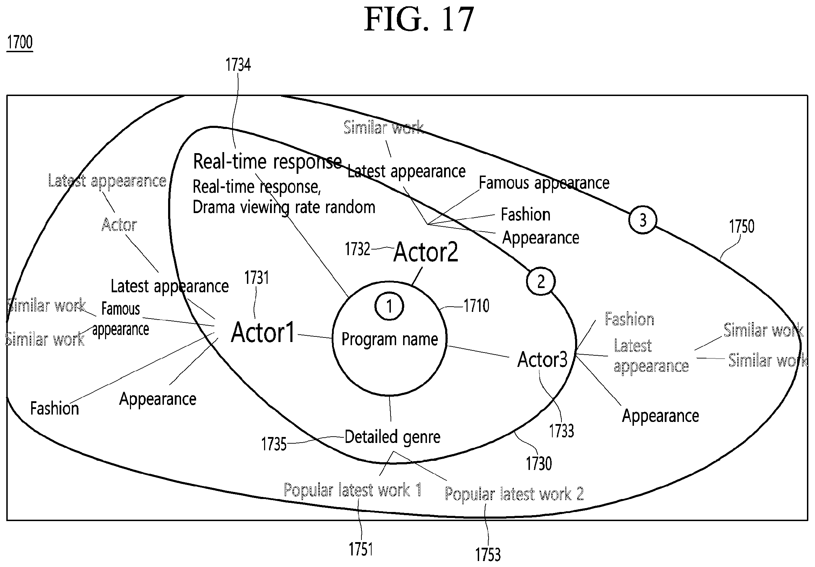

Fig. 17 is a view for describing a method for generating a continuous additional search source based on any one search source, according to another embodiment of the present disclosure.

The display device 100 may acquire a second search source and a third search source based on metadata of a first search source.

Fig. 17 illustrates a mind map 1700 that includes the generated second search sources and the third search sources generated by the second search sources, based on the first search source.

The search source can be text such as a keyword. The mind map 1700 may be a map including additional keywords dynamically generated based on any one keyword.

In Fig. 9, one of the plurality of search source icons 901 to 904 may be used to output the mind map 1700.

For example, when the fourth search source icon 904 is an icon corresponding to an app for providing the mind map, the mind map 1700 using the program name 601 as the first search source may be displayed according to the selection of the fourth search source icon 904.

The initial mind map 1700 may include only a first search source 1710 corresponding to the program name 601. The first search source 1710 may be implemented in the form of an icon including the program name.

Thereafter, when the first search source 1710 is focused by the pointer 205, the display device 100 may acquire a plurality of found second search sources 1731 to 1735 based on the first search source 1710 and display the plurality of obtained second search sources 1173 to 1735.

The display device 100 may acquire the search result for the first search source 1710 through a website.

The plurality of second search sources 1173 to 1735 may be distinguished from the third search source region 1750 through the second search source region 1730.

Each of the plurality of second search sources 1731 to 1735 is the name (actress 1, actor 2, actor 3) of each of the actors appearing in the program indicated by the first search source 1710, real-time viewing response, detailed genre of the program.

When the pointer 205 is located on the detailed genre 1735, the display device 100 may search for and generate popular latest works 1751 and 1753, which are the third search sources, based on the detailed genre 1735.

The display device 100 may acquire the third search sources for the detailed genre 1735 through the website.

As such, the third search source region 1750 including the plurality of third search sources may be generated by the plurality of second search sources 1173 to 1735.

According to an embodiment of the present disclosure, the display device 100 may automatically generate the third search sources when one of the plurality of second search sources 1173 to 1735 is not focused for a certain time.

As described above, the user can easily grasp search information at a glance through the mind map 1700 according to the embodiment of the present disclosure, without having to input a separate search word.

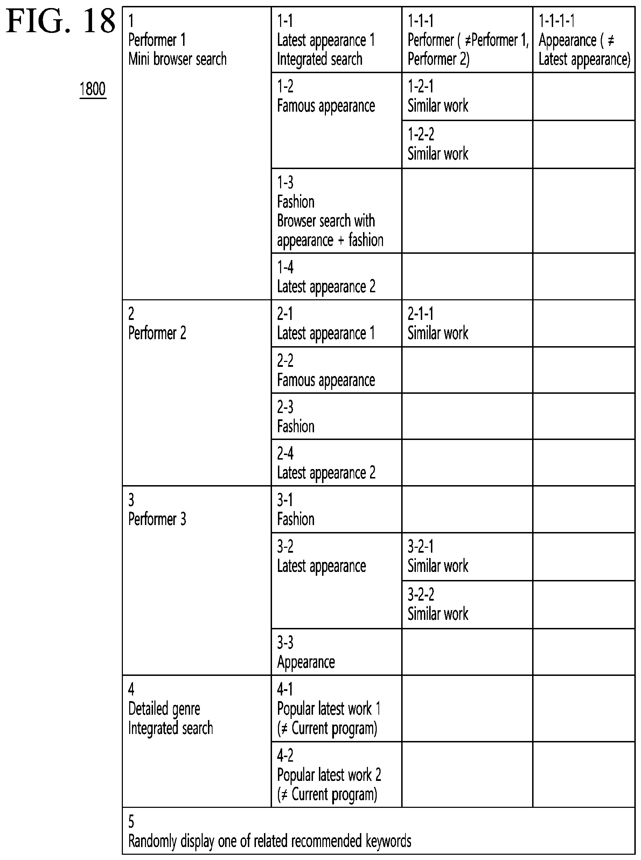

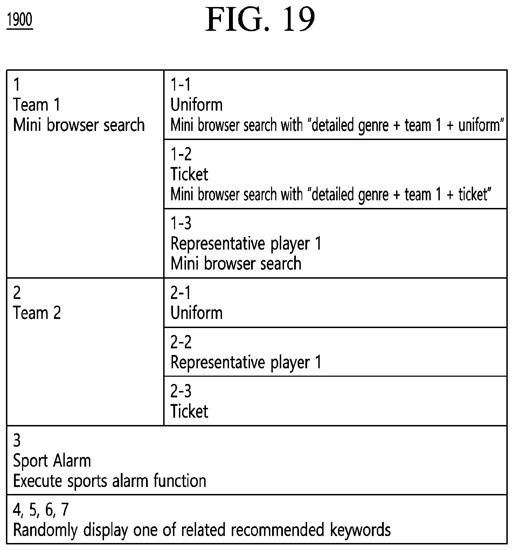

Figs. 18 and 19 are views illustrating a process of generating the mind map, according to an embodiment of the present disclosure.

In particular, Fig. 18 illustrates a search source table 1800 showing a process of generating a mind map when a genre of a program is drama, movie, and entertainment, and Fig. 19 illustrates a search source table 1900 showing a process of generating a mind map when a genre of a program is sports.

The search source table 1800 of Fig. 18 may include five second search sources (performer 1, performer 2, performer 3, detailed genre, and related recommended keyword) generated based on the first search source.

The display device 100 may generate a third search source based on the second search source, generates a fourth search source based on the third search source, and generates a fifth search source based on the fourth search source.

For example, when the second search source is the performer 1 of the program, the latest appearance 1 of the performer 1 may be generated as the third search source.

The display device 100 may acquire the performer of the latest appearance 1, which is the third search source, as the fourth search source.

The display device 100 may acquire the appearance of the performer, which is the fourth search source, as the fifth search source.

In an embodiment, the top search source and the bottom search source may be used at the same time for search results. For example, the performer 1 as the second search source and the fashion as the third search source may be used for simultaneous search for the search result "fashion of performer 1."

Meanwhile, the related recommendation keyword may indicate a recommendation keyword associated with the program name.

Performer 1, performer 2, and performer 3 may be major characters among the performers appearing in the program.

The display device 100 may search for the characters and program names included in metadata of the program through the web and determine the first character as the main character. The display device 100 may acquire the name of the performer, determined as the main character, as the second search source.

As another example, when the main performer of the program is unknown, the display device 100 may expose some performers randomly or sequentially.

Next, Fig. 19 is described.

A search source table 1900 of Fig. 19 may include seven second search sources (team 1, team 2, sports alarm, four related recommendation keywords) generated based on the first search source (e.g., baseball).

The display device 100 may generate the third search source based on the first search source and the second search source.

For example, when the second search source is team 1, which is the name of the baseball team, the third search source may be a uniform of team 1.

The display device 100 may acquire and display the search result by using the first search source (baseball), the second search source (team 1), and the third search source (uniform).

The sports alarm may be used to set an alarm of the game based on an airing schedule of a baseball game.

The related recommendation keyword may include keywords related to baseball, which is the search source.

According to various embodiments of the present disclosure, it is possible to quickly and easily check search results for search sources.

According to various embodiments of the present disclosure, a search result for one search source may be provided through a plurality of apps, thereby maximizing the availability of the search.

In addition, according to various embodiments of the present disclosure, the attribute of the app is reflected to the search source, thereby greatly improving search efficiency.

According to an embodiment of the present disclosure, the above-described method may be embodied as a processor readable code on a medium in which a program is recorded. Examples of processor-readable media include ROM, RAM, CD-ROM, magnetic tape, floppy disk, optical data storage device, and the like, and may be implemented in the form of a carrier wave (for example, transmission over the Internet).

## Claims

1. A display device (100) comprising:
a display (180) configured to display an execution screen of a calling application, wherein the execution screen of the calling application includes one or more texts and/or one or more images, and wherein each of the one or more texts and each of the one or more images represents one of a plurality of search sources; and
a controller (170) configured to:
receive an execution command of a context search application; and as a result of the execution command:
display, on the display (180), a plurality of search source icons (901, 902, 903, 904) in a vicinity of a pointer (205) located on one of the plurality of search sources, each search source icon identifying one of a plurality of search source applications matched with the calling application, wherein each of the plurality of search source applications is an application that outputs a search result for the search source;
when one (901) of the plurality of search source icons (901, 902, 903, 904) is selected, acquire the search result (1000) for the one of the plurality of search sources, on which the pointer (205) is located, through the search source application corresponding to the selected icon (901); and
display the acquired search result (1000) on the display (180).

2. The display device (100) according to claim 1, wherein, when a pointer controlled by a remote control device is located on one of the one or more texts, the controller is configured to acquire a text, on which the pointer is located, as the search source.

3. The display device (100) according to claim 1 or 2, wherein, when a pointer controlled by a remote control is located on the search source, the controller is configured to display, on the display, an indicator indicating that the context search application is executable.

4. The display device (100) according to one of claims 1 to 3, wherein the controller is configured to change the displayed plurality of search source icons identifying the plurality of search source applications according to the calling application.

5. The display device (100) according to one of claims 1 to 4, further comprising a storage configured to store a source table in which the plurality of search source applications are matched to a plurality of calling applications.

6. The display device (100) according to claim 5, wherein the controller is configured to extract the plurality of search source applications matched with the calling application by using the source table stored in the storage.

7. The display device (100) according to one of claims 1 to 6, wherein the controller is configured to acquire a search result for a context search source including intent acquired according to attributes of the search source and the calling application through the search source application.

8. The display device (100) according to one of claims 1 to 7, wherein the controller is configured to display the search result on one side of the selected icon in a preview form.

9. The display device (100) according to one of claims 1 to 8, wherein the controller is configured to switch the execution screen of the calling application to the search result.

10. The display device (100) according to one of claims 1 to 9, wherein the controller is configured to:
determine whether the plurality of search source applications matched with the calling application are installed on the display device; and
display, on the display, only a search source icon corresponding to the search source application installed on the display device according to a determination result.

11. The display device (100) according to one of claims 1 to 10, wherein the controller is configured to acquire an image of the execution screen as the search source.

12. The display device (100) according to one of claims 1 to 11, wherein the controller is configured to:
recognize an object included in an image of the execution screen; and
acquire identification data of the recognized object as the search source.

13. The display device (100) according to claim 12, wherein the controller is configured to receive data about the image from an auto content recognition server, and
wherein the received data about the image includes identification data of the object.

14. The display device (100) according to claim 13, wherein, when a pointer controlled by a remote control is located on the object, the controller is configured to acquire, from the data about the image, identification data of the object corresponding to coordinates at which the pointer is located.

15. An operating method of a display device (100), the operating method comprising:
displaying an execution screen of a calling application, wherein the execution screen of the calling application includes one or more texts and/or one or more images, and wherein each of the one or more texts and each of the one or more images represents one of a plurality of search sources;
receiving an execution command of a context search application; and as a result of the execution command:
displaying a plurality of search source icons (901, 902, 903, 904) in a vicinity of a pointer (205) located on one of the plurality of search sources, each search source icon identifying a plurality of search source applications matched with the calling application, wherein each of the plurality of search source applications is an application that outputs a search result for the search source;
when one (901) of the plurality of search source icons (901, 902, 903, 904) is selected, acquiring the search result (1000) for the one of the plurality of search sources, on which the pointer (205) is located, through the search source application corresponding to the selected icon (901); and
displaying the acquired search result (1000) on the display.

## Patentansprüche

1. Anzeigevorrichtung (100), umfassend:
ein Display (180), das dazu eingerichtet ist, einen Ausführungsbildschirm einer aufrufenden Anwendung anzuzeigen, wobei der Ausführungsbildschirm der aufrufenden Anwendung einen oder mehrere Texte und/oder ein oder mehrere Bilder enthält, und wobei jeder der einen oder mehreren Texte und jedes der einen oder mehreren Bilder eine von mehreren Suchquellen darstellt; und
eine Steuerung (170), die eingerichtet ist zum:
Empfangen eines Ausführungsbefehls einer Kontextsuchanwendung; und als Ergebnis des Ausführungsbefehls:
Anzeigen, auf dem Display (180), einer Mehrzahl von Suchquellen-Symbolen (901, 902, 903, 904) in der Nähe eines Zeigers (205), der sich auf einer der mehreren Suchquellen befindet, wobei jedes Suchquellen-Symbol eine von mehreren Suchquellen-Anwendungen identifiziert, die mit der aufrufenden Anwendung übereinstimmen, wobei jede der mehreren Suchquellen-Anwendungen eine Anwendung ist, die ein Suchergebnis für die Suchquelle ausgibt;
wenn eines (901) der mehreren Suchquellen-Symbole (901, 902, 903, 904) ausgewählt wird, Abgerufen des Suchergebnisses (1000) für diejenige der mehreren Suchquellen, auf der sich der Zeiger (205) befindet, durch die Suchquellen-Anwendung, die dem ausgewählten Symbol (901) entspricht; und
Anzeigen des abgerufenen Suchergebnisses (1000) auf dem Display (180).

2. Anzeigevorrichtung (100) nach Anspruch 1, wobei, wenn sich ein durch eine Fernbedienungsvorrichtung gesteuerter Zeiger auf einem der einen oder mehreren Texte befindet, die Steuerung dazu eingerichtet ist, einen Text, auf dem sich der Zeiger befindet, als Suchquelle zu erfassen.

3. Anzeigevorrichtung (100) nach Anspruch 1 oder 2, wobei, wenn sich ein durch eine Fernbedienung gesteuerter Zeiger auf der Suchquelle befindet, die Steuerung dazu eingerichtet ist, auf dem Display einen Hinweis anzeigt, der angibt, dass die Kontextsuchanwendung ausführbar ist.

4. Anzeigevorrichtung (100) nach einem der Ansprüche 1 bis 3, wobei die Steuerung dazu eingerichtet ist, die angezeigte Mehrzahl von Suchquellen-Symbolen, die die Mehrzahl von Suchquellen-Anwendungen kennzeichnen, entsprechend der aufrufenden Anwendung zu ändern.

5. Anzeigevorrichtung (100) nach einem der Ansprüche 1 bis 4, die ferner einen Speicher umfasst, der dazu eingerichtet ist, eine Quellentabelle zu speichern, in der die Mehrzahl von Suchquellenanwendungen einer Mehrzahl von aufrufenden Anwendungen zugeordnet ist.

6. Anzeigevorrichtung (100) nach Anspruch 5, wobei die Steuerung dazu eingerichtet ist, die Mehrzahl von Suchquellenanwendungen, die mit der aufrufenden Anwendung übereinstimmen, unter Verwendung der im Speicher gespeicherten Quellentabelle zu extrahieren.

7. Anzeigevorrichtung (100) nach einem der Ansprüche 1 bis 6, wobei die Steuerung dazu eingerichtet ist, ein Suchergebnis für eine Kontextsuchquelle zu erfassen, das eine Absicht enthält, die gemäß Attributen der Suchquelle und der aufrufenden Anwendung über die Suchquellenanwendung erfasst wurde.

8. Anzeigevorrichtung (100) nach einem der Ansprüche 1 bis 7, wobei die Steuerung dazu eingerichtet ist, das Suchergebnis auf einer Seite des ausgewählten Symbols in Form einer Vorschau anzuzeigen.

9. Anzeigevorrichtung (100) nach einem der Ansprüche 1 bis 8, wobei die Steuerung dazu eingerichtet ist, den Ausführungsbildschirm der aufrufenden Anwendung auf das Suchergebnis umzuschalten.

10. Anzeigevorrichtung (100) nach einem der Ansprüche 1 bis 9, wobei die Steuerung eingerichtet ist zum:
Ermitteln, ob die mehreren Suchquellenanwendungen, die mit der aufrufenden Anwendung übereinstimmen, auf dem Anzeigegerät installiert sind; und
Anzeigen, auf dem Display, nur eines Suchquellen-Symbols, das der auf dem Anzeigegerät installierten Suchquellen-Anwendung gemäß einem Ermittlungsergebnis entspricht.

11. Anzeigevorrichtung (100) gemäß einem der Ansprüche 1 bis 10, wobei die Steuerung dazu eingerichtet ist, ein Bild des Ausführungsbildschirms als Suchquelle zu erfassen.

12. Anzeigevorrichtung (100) gemäß einem der Ansprüche 1 bis 11, wobei die Steuerung eingerichtet ist zum:
Erkennen eines in einem Bild des Ausführungsbildschirms enthaltenen Objekts; und
Erfassen von Identifikationsdaten des erkannten Objekts als Suchquelle.

13. Anzeigevorrichtung (100) nach Anspruch 12, wobei die Steuerung dazu eingerichtet ist, Daten über das Bild von einem Server zur automatischen Inhaltserkennung zu empfangen, und
wobei die empfangenen Daten über das Bild Identifikationsdaten des Objekts enthalten.

14. Anzeigevorrichtung (100) nach Anspruch 13, wobei, wenn sich ein durch eine Fernbedienung gesteuerter Zeiger auf dem Objekt befindet, die Steuerung dazu eingerichtet ist, aus den Daten über das Bild Identifikationsdaten des Objekts zu erfassen, das den Koordinaten entspricht, an denen sich der Zeiger befindet.

15. Verfahren zum Betreiben einer Anzeigevorrichtung (100), wobei das Verfahren umfasst:
Anzeigen eines Ausführungsbildschirms einer aufrufenden Anwendung, wobei der Ausführungsbildschirm der aufrufenden Anwendung einen oder mehrere Texte und/oder ein oder mehrere Bilder umfasst, und wobei jeder der einen oder mehreren Texte und jedes der einen oder mehreren Bilder eine von mehreren Suchquellen darstellt;
Empfangen eines Ausführungsbefehls einer Kontextsuchanwendung; und als Ergebnis des Ausführungsbefehls:
Anzeigen einer Mehrzahl von Suchquellen-Symbolen (901, 902, 903, 904) in der Nähe eines Zeigers (205), der sich auf einer der Mehrzahl von Suchquellen befindet, wobei jedes Suchquellen-Symbol eine Mehrzahl von Suchquellen-Anwendungen identifiziert, die mit der aufrufenden Anwendung übereinstimmen, wobei jede der Mehrzahl von Suchquellen-Anwendungen eine Anwendung ist, die ein Suchergebnis für die Suchquelle ausgibt;
wenn eines (901) der mehreren Suchquellen-Symbole (901, 902, 903, 904) ausgewählt wird, Abrufen des Suchergebnisses (1000) für jene der mehreren Suchquellen, auf der sich der Zeiger (205) befindet, durch die Suchquellen-Anwendung, die dem ausgewählten Symbol (901) entspricht; und
Anzeigen des abgerufenen Suchergebnisses (1000) auf dem Display.

## Revendications

1. Dispositif d'affichage (100), comprenant:
un écran (180) configuré pour afficher un écran d'exécution d'une application appelante, dans lequel l'écran d'exécution de l'application appelante comprend un ou plusieurs textes et/ou une ou plusieurs images, et dans lequel chacun desdits un ou plusieurs textes et chacune desdites une ou plusieurs images représente une source de recherche d'une pluralité de sources de recherche; et
un contrôleur (170) configuré pour:
recevoir une instruction d'exécution d'une application de recherche de contexte; et grâce à l'instruction d'exécution:
afficher, à l'écran (180), une pluralité d'icônes de sources de recherche (901, 902, 903, 904) à proximité d'un pointeur (205) situé sur une source de recherche de la pluralité des sources de recherche, chaque icône de source de recherche identifiant une application parmi une pluralité d'applications de source de recherche correspondant à l'application appelante, dans lequel chaque application de source de recherche de la pluralité des applications de source de recherche est une application qui génère un résultat de recherche pour la source de recherche;
lorsqu'une icône de source de recherche (901) de la pluralité des icônes de source de recherche (901, 902, 903, 904) est sélectionnée, acquérir le résultat de recherche (1000) correspondant à la source de recherche de la pluralité des sources de recherche, sur laquelle se trouve le pointeur (205), par l'intermédiaire de l'application de source de recherche correspondant à l'icône sélectionnée (901); et
afficher à l'écran (180) le résultat de recherche acquis (1000).

2. Dispositif d'affichage (100) selon la revendication 1, dans lequel, lorsqu'un pointeur commandé par une télécommande se trouve sur l'un desdits un ou plusieurs textes, le contrôleur est configuré pour acquérir, comme source de recherche, un texte sur lequel se trouve le pointeur.

3. Dispositif d'affichage (100) selon la revendication 1 ou 2, dans lequel, lorsqu'un pointeur commandé par une télécommande se trouve sur la source de recherche, le contrôleur est configuré pour afficher, à l'écran, un indicateur signalant que l'application de recherche contextuelle est exécutable.

4. Dispositif d'affichage (100) selon l'une quelconque des revendications 1 à 3, dans lequel le contrôleur est configuré pour modifier la pluralité des icônes de source de recherche affichées, qui identifient la pluralité des applications de source de recherche, en fonction de l'application appelante.

5. Dispositif d'affichage (100) selon l'une quelconque des revendications 1 à 4, comprenant en outre une mémoire configurée pour stocker une table de sources dans laquelle la pluralité des applications de sources de recherche correspond à une pluralité d'applications appelantes.

6. Dispositif d'affichage (100) selon la revendication 5, dans lequel le contrôleur est configuré pour extraire la pluralité des applications de sources de recherche correspondant à l'application appelante à l'aide de la table de sources stockée dans la mémoire.

7. Dispositif d'affichage (100) selon l'une quelconque des revendications 1 à 6, dans lequel le contrôleur est configuré pour acquérir un résultat de source de contexte, y compris l'intention, en fonction des attributs de la source de recherche et de l'application appelante, par l'intermédiaire de l'application de sources de recherche.

8. Dispositif d'affichage (100) selon l'une quelconque des revendications 1 à 7, dans lequel le contrôleur est configuré pour afficher le résultat de recherche à côté de l'icône sélectionnée sous forme d'aperçu.

9. Dispositif d'affichage (100) selon l'une quelconque des revendications 1 à 8, dans lequel le contrôleur est configuré pour faire passer l'écran d'exécution de l'application appelante au résultat de recherche.

10. Dispositif d'affichage (100) selon l'une quelconque des revendications 1 à 9, dans lequel le contrôleur est configuré pour:
déterminer si la pluralité des applications de sources de recherche correspondant à l'application appelante sont installées sur le dispositif d'affichage; et
afficher, à l'écran, uniquement l'icône de source de recherche correspondant à l'application de source de recherche installée sur le dispositif d'affichage, conformément au résultat de la détermination.

11. Dispositif d'affichage (100) selon l'une quelconque des revendications 1 à 10, dans lequel le contrôleur est configuré pour acquérir une image de l'écran d'exécution en tant que source de recherche.

12. Dispositif d'affichage (100) selon l'une quelconque des revendications 1 à 11, dans lequel le contrôleur est configuré pour:
reconnaître un objet figurant sur une image de l'écran d'exécution; et
obtenir des données d'identification de l'objet reconnu en tant que source de recherche.

13. Dispositif d'affichage (100) selon la revendication 12, dans lequel le contrôleur est configuré pour recevoir des données relatives à l'image provenant d'un serveur de reconnaissance automatique de contenu, et
dans lequel les données reçues concernant l'image comprennent des données d'identification de l'objet.

14. Dispositif d'affichage (100) selon la revendication 13, dans lequel, lorsqu'un pointeur commandé par une télécommande se trouve sur l'objet, le contrôleur est configuré pour acquérir, à partir des données relatives à l'image, des données d'identification de l'objet correspondant aux coordonnées auxquelles se trouve le pointeur.

15. Procédé de fonctionnement d'un dispositif d'affichage (100), le procédé de fonctionnement comprenant:
l'affichage d'un écran d'exécution d'une application appelante, dans lequel l'écran d'exécution de l'application appelante comprend un ou plusieurs textes et/ou une ou plusieurs images, et dans lequel chacun desdits un ou plusieurs textes et chacune desdites une ou plusieurs images représente une source de recherche parmi une pluralité de sources de recherche;
la réception d'une instruction d'exécution d'une application de recherche de contexte; et grâce à l'instruction d'exécution:
l'affichage d'une pluralité d'icônes de sources de recherche (901, 902, 903, 904) à proximité d'un pointeur (205) situé sur une source de recherche de la pluralité des sources de recherche, chaque icône de source de recherche identifiant une pluralité d'applications de source de recherche correspondant à l'application appelante, dans lequel chaque application de source de recherche de la pluralité des applications de source de recherche est une application qui génère un résultat de recherche pour la source de recherche;
lorsqu'une icône de source de recherche (901) de la pluralité des icônes de source de recherche (901, 902, 903, 904) est sélectionnée, l'acquisition du résultat de recherche (1000) correspondant à la source de recherche de la pluralité des sources de recherche, sur laquelle se trouve le pointeur (205), par l'intermédiaire de l'application de source de recherche correspondant à l'icône sélectionnée (901); et
l'affichage à l'écran du résultat de recherche acquis (1000).
